# EUROPEAN PATENT APPLICATION

(11) **EP 2 589 768 A2**
(43) Date of publication of application: **08.05.2013**
(21) Application number: 12187757.5
(22) Date of filing: 09.10.2012
(51) Int. Cl.: F01N 3/021, F01N 13/04, F02D 41/02, F02D 41/30, F02D 41/00

(54) **Exhaust gas purifier for internal combustion engine**

(30) Priority: 01.11.2011 JP 2011240572
(71) Applicant: Kabushiki Kaisha Toyota Jidoshokki, Kariya-shi, Aichi 448-8671 (JP); TOYOTA JIDOSHA KABUSHIKI KAISHA, Toyota-shi, Aichi-ken, 471-8571 (JP)
(72) Inventor: Okamura, Masaaki, Kariya-shi, Aichi 448-8671 (JP); Takahashi, Yoshiyuki, Kariya-shi, Aichi 448-8671 (JP); Murata, Dai, Kariya-shi, Aichi 448-8671 (JP); Amaike, Masaaki, Kariya-shi, Aichi 448-8671 (JP)
(74) Representative: TBK

(57) **Abstract**

An exhaust gas purifier (26) has DPFs (19A, 19B) to collect and remove PM from exhaust gases passing through exhaust passages (11A, 11B), and ECU (25). ECU (25) estimates PM emission amounts to respective DPFs (19A, 19B), based on air-fuel ratios of the exhaust gases detected by air-fuel ratio sensors (22A, 22B) and exhaust temperatures detected by exhaust temperature sensors (20A, 20B). When a difference between PM emission amount estimates for DPFs (19A, 19B) is larger than a threshold, ECU (25) gives offsets to a fuel injection quantity of respective cylinder groups (3A, 3B) so as to decrease a difference between PM emission amounts to DPFs (19A, 19B). ECU (25) controls each of fuel injection valves (4) in the cylinder groups (3A, 3B) so as to perform main injection according to the offset fuel injection quantities.

## Description

### Technical Field

The present invention relates to an exhaust gas purifier for an internal combustion engine having first and second cylinder groups.

### Background Art

One of known exhaust gas purifiers for an internal combustion engine having first and second cylinder groups is, for example, the exhaust gas purifier described in Patent Literature 1. The exhaust gas purifier described in Patent Literature 1 is provided with a first exhaust passage connected to the first cylinder group, a second exhaust passage connected to the second cylinder group, collectors (collecting filters) arranged respectively on the first and second exhaust passages and configured to collect black exhaust particles (PM: Particulate Matter) from exhaust gas, and differential pressure detectors each of which detects a differential pressure between upstream and downstream of the corresponding collector. The exhaust gas purifier described in Patent Literature 1 is configured to estimate exhaust gas flow rates in the respective exhaust passages, based on the respective differential pressures detected by the differential pressure detectors.

### Citation List

### Patent Literature

Patent Literature 1: Japanese Patent Application Laid-open No. 2005-226531

### Summary of Invention

### Technical Problem

In the foregoing exhaust gas purifier, when amounts of PM accumulated in the collecting filters (PM accumulation amounts) become large, it is necessary to perform so-called regeneration of the collecting filters to burn PM. On this occasion, when the PM accumulation amounts of the two collecting filters are different, it is common practice to perform the regeneration of the two collecting filters in time with the collecting filter with the larger PM accumulation amount out of the two collecting filters. The regeneration processes of the two collecting filters start at a time when the PM accumulation amount of either one of the two collecting filters reaches a PM accumulation limit. Then the regeneration processes of the two collecting filters are completed at the same time. In this case, however, the regeneration of the collecting filter with the smaller PM accumulation amount is carried out before the PM accumulation amount reaches the PM accumulation limit. Therefore, intervals to the start of regeneration become shorter, so as to result in increase in regeneration frequency, causing reduction of fuel efficiency.

It is an object of the present invention to provide an exhaust gas purifier for an internal combustion engine capable of suppressing the reduction of fuel efficiency of the internal combustion engine.

### Solution to Problem

The present invention provides an exhaust gas purifier for an internal combustion engine with first and second cylinder groups each including a plurality of cylinders equipped with fuel injection valves to inject fuel, comprising: a first exhaust passage connected to the plurality of cylinders included in the first cylinder group; a second exhaust passage connected to the plurality of cylinders included in the second cylinder group; a first filter arranged in the first exhaust passage and configured to collect particulate matter discharged from the plurality of cylinders to which the first exhaust passage is connected; a second filter arranged in the second exhaust passage and configured to collect particulate matter discharged from the plurality of cylinders to which the second exhaust passage is connected; emission amount estimating means to estimate emission amounts of particulate matter to the first and second filters; and controlling means to individually control the fuel injection valves in the first and second cylinder groups so as to decrease a difference between the emission amounts of particulate matter to the first and second filters estimated by the emission amount estimating means.

In the present invention, the emission amounts of particulate matter to the first and second filters are estimated and the fuel injection valves in the first and second cylinder groups are individually controlled so as to decrease the difference between the particulate matter emission amounts. For this reason, even if there is the difference between the emission amounts (accumulation amounts) of particulate matter to the first and second filters, the difference will be decreased. For example, for the filter with the larger particulate matter emission amount out of the first and second filters, the fuel injection valves in the corresponding cylinder group are controlled so as to decrease the particulate matter emission amount. For example, for the filter with the smaller particulate matter emission amount out of the first and second filters, the fuel injection valves in the corresponding cylinder group are controlled so as to increase the particulate matter emission amount. Since the emission amount of particulate matter to the filter with the greater particulate matter accumulation amount becomes reduced, the time when the particulate matter accumulation amount to the filter reaches the accumulation limit is delayed, and then the start timing of regeneration of the filter is delayed by that degree. Therefore, the intervals to the start of regeneration become longer, so as to result in decrease in regeneration frequency. As a result, it is feasible to suppress the reduction of fuel efficiency of the internal combustion engine.

The exhaust gas purifier may be configured as follows: the controlling means has means to determine whether the difference between the emission amounts of particulate matter to the first and second filters is larger than a predetermined amount; when the difference between the emission amounts of particulate matter to the first and second filters is larger than the predetermined amount, the controlling means individually controls the fuel injection valves in the first and second cylinder groups so as to decrease the difference between the emission amounts of particulate matter to the first and second filters. In this case, when the difference between the emission amounts of particulate matter to the first and second filters is smaller than the predetermined amount, the individual control is not carried out on the fuel injection valves in the first and second cylinder groups, which eliminates the need for excessive calculation processing or the like. Therefore, the processing can be simplified.

The exhaust gas purifier may further comprise load detecting means to detect a load of the internal combustion engine, and the controlling means may have: correcting means to correct a fuel injection quantity corresponding to the load of the internal combustion engine detected by the load detecting means, for each of the first and second cylinder groups, so as to decrease the difference between the emission amounts of particulate matter to the first and second filters; and means to individually control the fuel injection valves in the first and second cylinder groups so as to perform fuel injection according to the fuel injection quantities corrected for the respective first and second cylinder groups by the correcting means. In this case, the difference between the emission amounts of particulate matter to the first and second filters can be reduced, regardless of the load of the internal combustion engine (e.g., an accelerator position angle).

The exhaust gas purifier may further comprise engine speed detecting means to detect an engine speed of the internal combustion engine, and the correcting means may correct the fuel injection quantity corresponding to the load of the internal combustion engine, for each of the first and second cylinder groups, so as to decrease the difference between the emission amounts of particulate matter to the first and second filters, using an injection quantity correction map according to the fuel injection quantity corresponding to the load of the internal combustion engine detected by the load detecting means and the engine speed of the internal combustion engine detected by the engine speed detecting means. In this case, the correction process of the fuel injection quantity for each of the cylinder groups can be readily carried out by use of a plurality of injection quantity correction maps according to fuel injection quantities corresponding to loads of the internal combustion engine and engine speeds of the internal combustion engine.

The emission amount estimating means may have: first air-fuel ratio detecting means to detect an air-fuel ratio of exhaust gas passing through the first exhaust passage; second air-fuel ratio detecting means to detect an air-fuel ratio of exhaust gas passing through the second exhaust passage; first temperature detecting means to detect a temperature of the exhaust gas passing through the first exhaust passage; second temperature detecting means to detect a temperature of the exhaust gas passing through the second exhaust passage; and means to estimate the emission amounts of particulate matter to the first and second filters, based on the air-fuel ratios of the exhaust gases detected by the first and second air-fuel ratio detecting means and the temperatures of the exhaust gases detected by the first and second temperature detecting means. In this case, it is feasible to readily and surely estimate the emission amounts of particulate matter to the first and second filters.

The emission amount estimating means may have: first differential pressure detecting means to detect a differential pressure between upstream and downstream of the first filter; second differential pressure detecting means to detect a differential pressure between upstream and downstream of the second filter; and means to estimate the emission amounts of particulate matter to the first and second filters, based on the differential pressures between upstream and downstream of the first and second filters detected by the first and second differential pressure detecting means. In this case, it is feasible to readily and surely estimate the emission amounts of particulate matter to the first and second filters.

### Advantageous Effect of Invention

The present invention enables reduction in regeneration frequency of the filters and suppression of the reduction of fuel efficiency of the internal combustion engine.

### Brief Description of Drawings

Fig. 1 is a schematic configuration diagram showing an internal combustion engine with an exhaust gas purifier according to an embodiment of the present invention.
Fig. 2 is a flowchart showing a processing procedure executed by ECU.
Fig. 3 is a graph showing an example of a PM emission amount estimation map.
Fig. 4 is a graph showing an example of an injection quantity offset map.
Fig. 5 is a conceptual diagram showing a relation of engine speed versus fuel injection quantity to determine an injection quantity offset map.

### Description of Embodiments

The preferred embodiments of the present invention will be described below in detail with reference to the accompanying drawings.

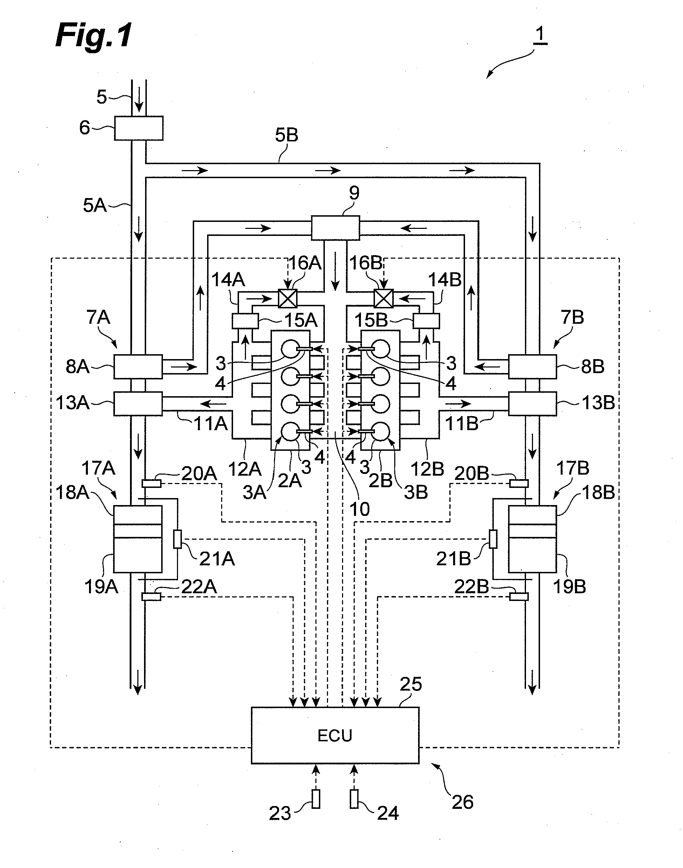

Fig. 1 is a schematic configuration diagram showing an internal combustion engine equipped with an exhaust gas purifier according to an embodiment of the present invention. In the same drawing, the internal combustion engine 1 is configured as a V-eight diesel engine.

The diesel engine 1 is provided with left and right banks 2A, 2B, and four cylinders 3 are arranged in each of the banks 2A, 2B. The four cylinders 3 in the bank 2A constitute one cylinder group 3A and the four cylinders 3 in the bank 2B constitute another cylinder group 3B. Each cylinder 3 is provided with a fuel injection valve 4 to inject fuel into a combustion chamber.

The diesel engine 1 is provided with an intake passage 5 for supplying air to each of the cylinders 3. The intake passage 5 is bifurcated into a pair of intake branch passages 5A, 5B downstream of an air cleaner 6. The intake branch passages 5A, 5B are equipped with respective compressors 8A, 8B of turbochargers 7A, 7B. Each intake branch passage 5A, 5B is connected through an intercooler 9 to an intake manifold 10. Each intake manifold 10 is coupled to the corresponding bank 2A or 2B.

Exhaust passages 11A, 11B for discharging exhaust gas after combustion from each cylinder 3 are connected to the respective banks 2A, 2B through exhaust manifolds 12A, 12B, respectively. The exhaust passages 11A, 11B are equipped with respective turbines 13A, 13B of the turbochargers 7A, 7B.

Each of the exhaust manifolds 12A, 12B is connected to the intake manifold 10 through an exhaust gas recirculation (EGR) passage 14A or 14B. The EGR passages 14A, 14B are passages for recirculating part of exhaust gas after combustion to each cylinder 3, as EGR gas. The EGR passages 14A, 14B are equipped with respective EGR coolers 15A, 15B for cooling the EGR gas, and with respective EGR valves 16A, 16B for regulating the recirculation quantity of EGR gas.

Exhaust purifying units 17A, 17B are arranged on the downstream side of the respective turbochargers 7A, 7B in the exhaust passages 11A, 11B. Each exhaust purifying unit 17A, 17B has a diesel oxidation catalyst (DOC) 18A or 18B and a diesel particulate filter (DPF) 19A or 19B. The diesel oxidation catalysts 18A, 18B remove particulate matter (PM) from exhaust gas by catalysis (oxidation). The diesel particulate filters 19A, 19B collect and remove PM from exhaust gas.

Exhaust temperature sensors 20A, 20B are arranged between the turbines 13A, 13B and the exhaust purifying units 17A, 17B in the exhaust passages 11A, 11B, respectively. The exhaust temperature sensors 20A, 20B are sensors (temperature detecting means) to detect temperatures of exhaust gases (exhaust temperatures) passing through the respective exhaust passages 11A, 11B. The exhaust temperature sensors 20A, 20B may be located between DOCs 18A, 18B and DPFs 19A, 19B in the exhaust purifying units 17A, 17B or on the downstream side of the exhaust purifying units 17A, 17B in the exhaust passages 11A, 11B, respectively.

Differential pressure sensors 21A, 21B are connected to the respective exhaust passages 11A, 11B. The differential pressure sensors 21A, 21B are sensors (differential pressure detecting means) to detect differential pressures between upstream and downstream of the exhaust purifying units 17A, 17B, respectively. Air-fuel ratio sensors 22A, 22B are disposed downstream of the exhaust purifying units 17A, 17B in the exhaust passages 11A, 11B, respectively. The air-fuel ratio sensors 22A, 22B are sensors (air-fuel ratio detecting means) to detect air-fuel ratios (A/F) of exhaust gases passing through the respective exhaust passages 11A, 11B.

The diesel engine 1 is provided with an engine speed sensor 23, an accelerator position sensor 24, and an electronic control unit (ECU) 25. The engine speed sensor 23 is a sensor (engine speed detecting means) to detect an engine speed. The accelerator position sensor 24 is a sensor (load detecting means) to detect a step-on angle of the accelerator pedal (accelerator position angle) as an engine load.

ECU 25 receives detected signals from the exhaust temperature sensors 20A, 20B, differential pressure sensors 21A, 21B, air-fuel ratio sensors 22A, 22B, engine speed sensor 23, and accelerator position sensor 24, performs predetermined processing, and controls each of the fuel injection valves 4 and EGR valves 16A, 16B.

The exhaust purifying units 17A, 17B, exhaust temperature sensors 20A, 20B, differential pressure sensors 21A, 21B, air-fuel ratio sensors 22A, 22B, engine speed sensor 23, accelerator position sensor 24, and ECU 25 constitute the exhaust gas purifier 26 of the present embodiment.

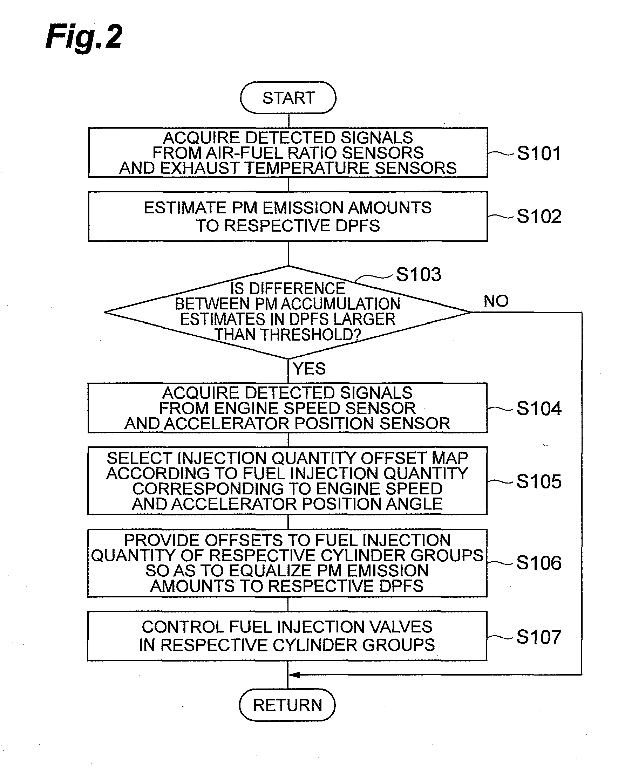

Fig. 2 is a flowchart showing a processing procedure executed by ECU 25. In this processing, ECU 25 estimates amounts of PM (PM emission amounts) discharged to respective DPFs 19A, 19B, and controls each of the fuel injection valves 4 in the cylinder groups 3A, 3B so as to correct each of the emission amounts of PM to respective DPFs 19A, 19B. Each PM emission amount corresponds to an amount of PM accumulated in corresponding DPF 19A or 19B (PM accumulation amount). This processing is carried out after every lapse of a fixed time or after every run of a fixed distance.

First, ECU 25 acquires detected signals from the air-fuel ratio sensors 22A, 22B and the exhaust temperature sensors 20A, 20B (S101). Next, ECU 25 estimates each of PM emission amounts to DPFs 19A, 19B (PM accumulation amounts in the DPFs 19A, 19B), based on the air-fuel ratios of exhaust gases detected by the air-fuel ratio sensors 22A, 22B and the exhaust temperatures detected by the exhaust temperature sensors 20A, 20B. By this estimation, ECU 25 obtains respective PM emission estimates to DPFs 19A, 19B (respective PM accumulation estimates in DPFs 19A, 19B) (S102).

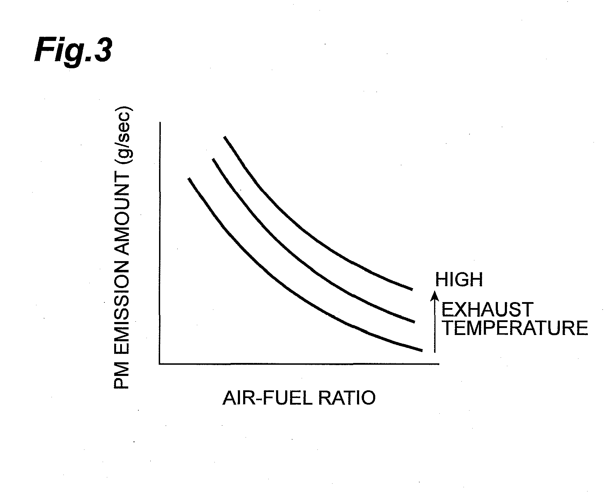

The estimation of PM emission amounts is carried out using a PM emission estimation map as shown in Fig. 3. The PM emission estimation map is a map showing relations of air-fuel ratio of exhaust gas, exhaust temperature, and PM emission amount. In the PM emission estimation map, the PM emission amount is set to decrease with increase in air-fuel ratio and to increase with increase in exhaust temperature.

Thereafter, ECU 25 determines whether a difference between the PM emission estimates to DPFs 19A, 19B is larger than a predetermined threshold (S103). ECU 25 terminates the present processing when ECU 25 determines that the difference between the PM emission estimates to DPFs 19A, 19B is not larger than the threshold.

When ECU 25 determines that the difference between the PM emission estimates to DPFs 19A, 19B is larger than the threshold, ECU 25 acquires detected signals from the engine speed sensor 23 and the accelerator position sensor 24 (S104). Next, ECU 25 selects an injection quantity offset map according to a fuel injection quantity corresponding to an engine speed detected by the engine speed sensor 23 and an accelerator position angle detected by the accelerator position sensor 24 (S105).

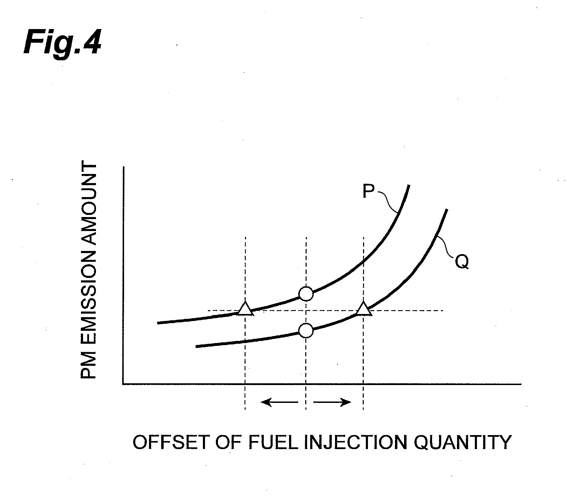

The injection quantity offset map, as shown in Fig. 4, shows relations of fuel injection quantity versus PM emission amount for respective DPFs 19A, 19B, in which the PM emission amount is set to increase with increase in fuel injection quantity. For example, in Fig. 4, solid line P indicates the relation of fuel injection quantity versus PM emission amount for DPF 19A and solid line Q the relation of fuel injection quantity versus PM emission amount for DPF 19B. The fuel injection quantity used in the process of S105 is that of main injection which is fuel injection for generation of driving force by the diesel engine 1.

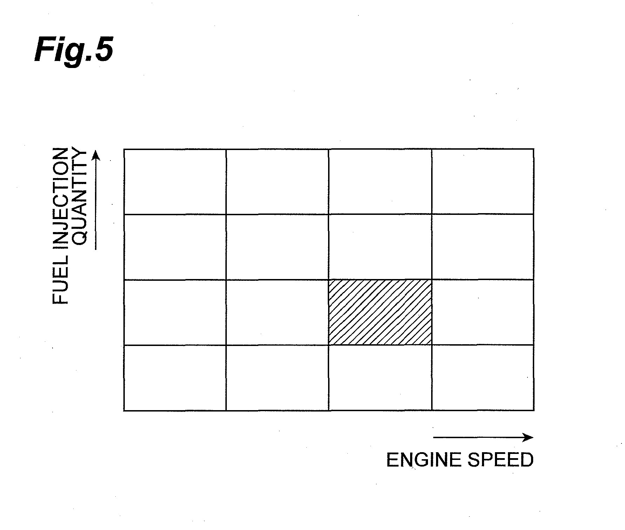

There are a plurality of injection quantity offset maps prepared for respective regions according to engine speeds and fuel injection quantities, as shown in Fig. 5. The characteristic curves such as solid lines P, Q in the injection quantity offset maps are determined in advance by bench tests with diesel engine 1 alone and are selected for each individual diesel engine 1.

Next, ECU 25 provides respective offsets for the fuel injection quantity of the cylinder groups 3A, 3B set according to the accelerator position angle, so as to equalize the PM emission amounts to respective DPFs 19A, 19B (S106), using the injection quantity offset map selected in the process of S105. The same fuel injection quantity is set for each of the cylinder groups 3A, 3B in accordance with the accelerator position (cf. white circles in Fig. 4).

For example, in a situation in which the PM emission amount to DPF 19A indicated by solid line P is larger than that to DPF 19B indicated by solid line Q (cf. white circles in the drawing), as shown in Fig. 4, the fuel injection quantity of the cylinder group 3A is given the offset of a desired quantity in decreasing direction, while the fuel injection quantity of the cylinder group 3B is given the offset of a desired quantity in increasing direction. This makes the PM emission amounts to respective DPFs 19A, 19B equal to each other (cf. white triangles in Fig. 4).

Then ECU 25 controls each of the fuel injection valves 4 in the cylinder groups 3A, 3B so as to perform main injection according to the fuel injection quantities offset by the process of S106 (S107).

In the above configuration, the air-fuel ratio sensors 22A, 22B, exhaust temperature sensors 20A, 20B, and ECU 25 constitute emission amount estimating means to estimate emission amounts of particulate matter to the respective filters (respective DPFs 19A, 19B). ECU 25 constitutes controlling means to individually control the fuel injection valves 4 in each of the cylinder groups 3A, 3B so as to decrease the difference between the emission amounts of particulate matter to the respective filters 19A, 19B estimated by the emission amount estimating means. ECU 25 (particularly, the processes in S101 and S102) functions as a part of the emission amount estimating means. ECU 25 (particularly, the processes in S103 to S107) functions as the controlling means.

ECU 25 (particularly, the processes in S101 and S102) functions as means which estimates emission amounts of particulate matter to the respective filters 19A, 19B, based on the air-fuel ratios of exhaust gases detected by the air-fuel ratio detecting means (air-fuel ratio sensors 22A, 22B) and the temperatures of exhaust gases detected by the temperature detecting means (exhaust temperature sensors 20A, 20B). ECU 25 (particularly, the process in S103) functions as means which determines whether the difference between the emission amounts of particulate matter to the respective filters 19A, 19B is larger than the predetermined amount. ECU 25 (particularly, the processes in S104 to S106) functions as correcting means which corrects the fuel injection quantity corresponding to the load of the internal combustion engine 1 detected by the load detecting means (accelerator position sensor 24), for each of the cylinder groups 3A, 3B, so as to decrease the difference between the emission amounts of particulate matter to the respective filters 19A, 19B. ECU 25 (particularly, the process in S107) functions as means which individually controls the fuel injection valves 4 in each of the cylinder groups 3A, 3B, so as to perform fuel injection according to the fuel injection quantities corrected for the respective cylinder groups 3A, 3B by the correcting means.

When the PM accumulation amount in DPF 19A or DPF 19B reaches a PM accumulation limit, so-called regeneration of DPFs 19A, 19B is carried out to oxidize (or burn) PM accumulated in DPFs 19A, 19B by high temperature fuel. Incidentally, even if the air-fuel ratios of exhaust gases through the exhaust passages 11A, 11B are equal, concentrations of PM discharged to DPF 19A and to DPF 19B will be different if fuel spray characteristics of the fuel injection valves 4 in the cylinder group 3A are different from those of the fuel injection valves 4 in the cylinder group 3B. For this reason, the respective PM emission characteristics to DPFs 19A, 19B will be different, so as to cause the difference between the PM emission amounts to DPFs 19A, 19B (PM accumulation amounts in DPFs 19A, 19B).

If regeneration is performed in time with DPF with the greater PM accumulation amount out of DPF 19A and DPF 19B with the difference between the PM emission amounts to DPFs 19A, 19B, DPF with the smaller PM accumulation amount out of DPFs 19A, 19B will be subjected to regeneration before the PM accumulation amount reaches the PM accumulation limit. Therefore, for DPF with the smaller PM accumulation amount out of DPFs 19A and 19B, an interval from an end of previous regeneration to a start of next regeneration (regeneration interval) will become shorter. This will increase the regeneration frequency, so as to result in reduction of fuel efficiency.

In contrast to it, in the present embodiment ECU 25 estimates the respective PM emission amounts to DPFs 19A, 19B, based on the detected signals from the air-fuel ratio sensors 22A, 22B and the exhaust temperature sensors 20A, 20B. When ECU 25 determines that the difference between the PM emission amount estimate for DPF 19A and the PM emission amount estimate for DPF 19B is larger than the threshold, ECU 25 gives the offsets opposite to each other to the respective fuel injection quantity, for each of the cylinder groups 3A, 3B, so as to equalize the PM emission amounts to respective DPFs 19A, 19B. ECU 25 controls each of the fuel injection valves 4 in the cylinder groups 3A, 3B so as to perform main injection according to the offset fuel injection quantities.

Even if there is a difference between the respective PM emission amounts to DPFs 19A, 19B because of the difference of fuel spray characteristics of the fuel injection valves 4 in the respective cylinder groups 3A, 3B, the foregoing operation will absorb this difference to equalize the respective PM emission amounts to DPFs 19A, 19B. For DPF with the larger PM accumulation amount out of DPFs 19A, 19B, the fuel injection quantity from the corresponding fuel injection valves 4 is reduced, thereby to decrease the PM emission amount. For DPF with the smaller PM accumulation amount out of DPFs 19A, 19B, the fuel injection quantity from the corresponding fuel injection valves 4 is increased, to increase the PM emission amount. Since the PM emission amount is reduced to DPF with the larger PM emission amount out of DPFs 19A, 19B, it results in a delay of the time when the PM accumulation amount of the DPF reaches the PM accumulation limit. Therefore, the regeneration start timing of DPFs 19A, 19B is delayed, so as to lengthen the regeneration intervals, resulting in decrease of regeneration frequency. This can suppress the reduction of fuel efficiency.

DOCs 18A, 18B use noble metal (platinum or the like) in order to compensate for oxidation due to thermal deterioration. In the present embodiment, as described above, the regeneration frequency decreases, so as to suppress the thermal deterioration of DOCs 18A, 18B. As a result, it becomes feasible to reduce an amount of noble metal (platinum or the like) in DOCs 18A, 18B.

The present invention is by no means limited to the above-described embodiment. For example, the present embodiment involves the process of estimating the respective PM emission amounts to DPFs 19A, 19B (respective PM accumulation amounts in DPFs 19A, 19B), based on the air-fuel ratios of exhaust gases detected by the respective air-fuel ratio sensors 22A, 22B and the exhaust temperatures detected by the respective exhaust temperature sensors 20A, 20B, but the present invention is not limited to this. The respective PM emission amounts to DPFs 19A, 19B (respective PM accumulation amounts in DPFs 19A, 19B) may be estimated based on the differential pressures between upstream and downstream of DPFs 19A, 19B detected by the respective differential pressure sensors 21A, 21B. In this case, the PM emission amounts can be estimated based on a map (not shown) indicating a relation of differential pressure between upstream and downstream of DPFs 19A, 19B versus PM emission amount.

In the present embodiment, the fuel injection quantity of the cylinder groups 3A, 3B is given the respective offsets so as to equalize the respective PM emission amounts to DPFs 19A, 19B, but the present invention is not limited to this. The fuel injection quantity of the cylinder groups 3A, 3B may be given the respective offsets so as to decrease the difference between the PM emission amounts to DPFs 19A, 19B. The offset operation may be carried out for each of regions as shown in Fig. 5, and the offset amounts may be continuously updated every foregoing processing.

The internal combustion engine 1 in the present embodiment is the V-eight diesel engine, but it should be noted that the present invention can be applied to any internal combustion engine having two cylinder groups.

### Industrial Applicability

The present invention is applicable to the exhaust gas purifiers for V-type multi-cylinder diesel engines.

### Reference Signs List

1 diesel engine (internal combustion engine); 3A, 3B cylinder groups; 4 fuel injection valves; 11A, 11B exhaust passages; 19A, 19B DPFs (filters); 20A, 20B exhaust temperature sensors (temperature detecting means and emission amount estimating means); 21A, 21B differential pressure sensors (differential pressure detecting means and emission amount estimating means); 22A, 22B air-fuel ratio sensors (air-fuel ratio detecting means and emission amount estimating means); 23 engine speed sensor (engine speed detecting means); 24 accelerator position sensor (load detecting means); 25 ECU (emission amount estimating means, controlling means, and correcting means); 26 exhaust gas purifier.

### Exhaust Gas Purifier for Internal Combustion Engine

An exhaust gas purifier (26) has DPFs (19A, 19B) to collect and remove PM from exhaust gases passing through exhaust passages (11A, 11B), and ECU (25). ECU (25) estimates PM emission amounts to respective DPFs (19A, 19B), based on air-fuel ratios of the exhaust gases detected by air-fuel ratio sensors (22A, 22B) and exhaust temperatures detected by exhaust temperature sensors (20A, 20B). When a difference between PM emission amount estimates for DPFs (19A, 19B) is larger than a threshold, ECU (25) gives offsets to a fuel injection quantity of respective cylinder groups (3A, 3B) so as to decrease a difference between PM emission amounts to DPFs (19A, 19B). ECU (25) controls each of fuel injection valves (4) in the cylinder groups (3A, 3B) so as to perform main injection according to the offset fuel injection quantities.

## Claims

1. An exhaust gas purifier (26) for an internal combustion engine (1) with first and second cylinder groups (3A, 3B) each including a plurality of cylinders (3) equipped with fuel injection valves (4) to inject fuel, comprising:
a first exhaust passage (11A) connected to the plurality of cylinders (3) included in the first cylinder group (3A);
a second exhaust passage (11B) connected to the plurality of cylinders (3) included in the second cylinder group (3B);
a first filter (19A) arranged in the first exhaust passage (11A) and configured to collect particulate matter discharged from the plurality of cylinders (3) to which the first exhaust passage (11A) is connected;
a second filter (19B) arranged in the second exhaust passage (11B) and configured to collect particulate matter discharged from the plurality of cylinders (3) to which the second exhaust passage (11B) is connected;
emission amount estimating means (20A, 20B, 21A, 21B, 22A, 22B, 25) to estimate emission amounts of particulate matter to the first and second filters (19A, 19B); and
controlling means (25) to individually control the fuel injection valves (4) in the first and second cylinder groups (3A, 3B) so as to decrease a difference between the emission amounts of particulate matter to the first and second filters (19A, 19B) estimated by the emission amount estimating means.

2. The exhaust gas purifier (26) for the internal combustion engine (1) according to claim 1,
wherein the controlling means (25) has means (25) to determine whether the difference between the emission amounts of particulate matter to the first and second filters (19A, 19B) is larger than a predetermined amount, and wherein when the difference between the emission amounts of particulate matter to the first and second filters (19A, 19B) is larger than the predetermined amount, the controlling means (25) individually controls the fuel injection valves (4) in the first and second cylinder groups (3A, 3B) so as to decrease the difference between the emission amounts of particulate matter to the first and second filters (19A, 19B).

3. The exhaust gas purifier (26) for the internal combustion engine (1) according to claim 1 or 2, further comprising:
load detecting means (24) to detect a load of the internal combustion engine (1),
wherein the controlling means (25) has:
correcting means (25) to correct a fuel injection quantity corresponding to the load of the internal combustion engine (1) detected by the load detecting means (24), for each of the first and second cylinder groups (3A, 3B), so as to decrease the difference between the emission amounts of particulate matter to the first and second filters (19A, 19B); and
means (25) to individually control the fuel injection valves (4) in the first and second cylinder groups (3A, 3B) so as to perform fuel injection according to the fuel injection quantities corrected for the respective first and second cylinder groups (3A, 3B) by the correcting means (25).

4. The exhaust gas purifier (26) for the internal combustion engine (1) according to claim 3, further comprising:
engine speed detecting means (23) to detect an engine speed of the internal combustion engine,
wherein the correcting means (25) corrects the fuel injection quantity corresponding to the load of the internal combustion engine (1), for each of the first and second cylinder groups (3A, 3B), so as to decrease the difference between the emission amounts of particulate matter to the first and second filters (19A, 19B), using an injection quantity correction map according to the fuel injection quantity corresponding to the load of the internal combustion engine (1) detected by the load detecting means (24) and the engine speed of the internal combustion engine (1) detected by the engine speed detecting means (23).

5. The exhaust gas purifier (26) for the internal combustion engine (1) according to any one of claims 1 to 4,
wherein the emission amount estimating means (20A, 20B, 22A, 22B, 25) has:
first air-fuel ratio detecting means (22A) to detect an air-fuel ratio of exhaust gas passing through the first exhaust passage (11A);
second air-fuel ratio detecting means (22B) to detect an air-fuel ratio of exhaust gas passing through the second exhaust passage (11B);
first temperature detecting means (20A) to detect a temperature of the exhaust gas passing through the first exhaust passage (11A);
second temperature detecting means (20B) to detect a temperature of the exhaust gas passing through the second exhaust passage (11B); and
means (25) to estimate the emission amounts of particulate matter to the first and second filters (19A, 19B), based on the air-fuel ratios of the exhaust gases detected by the first and second air-fuel ratio detecting means (22A, 22B) and the temperatures of the exhaust gases detected by the first and second temperature detecting means (20A, 20B).

6. The exhaust gas purifier (26) for the internal combustion engine (1) according to any one of claims 1 to 4,
wherein the emission amount estimating means (21A, 21B, 25) has:
first differential pressure detecting means (21A) to detect a differential pressure between upstream and downstream of the first filter (19A);
second differential pressure detecting means (21B) to detect a differential pressure between upstream and downstream of the second filter (19B); and
means (25) to estimate the emission amounts of particulate matter to the first and second filters (19A, 19B), based on the differential pressures between upstream and downstream of the first and second filters (19A, 19B) detected by the first and second differential pressure detecting means (21A, 21B).
